# EUROPEAN PATENT APPLICATION

(11) **EP 1 796 197 A1**
(43) Date of publication of application: **13.06.2007**
(21) Application number: 05388105.8
(22) Date of filing: 07.12.2005
(51) Int. Cl.: H01M 8/04

(54) **A system for generating electrical power using fuel cells and an improved method for generating electric power using fuel cells**

(71) Applicant: The Technical University of Denmark (DTU), 2800 Lyngby (DK)
(72) Inventor: Clausen, Lasse Rongaard, 3660 Stenlose (DK); Vium, Johan Ådne Hardang, 1717 Kobenhavn V (DK); Mortensen, Henrik Hilleke, 2950 Vedbæk (DK); Bang-Moller, Christian, 2900 Hellerup (DK)
(74) Representative: Nilausen, Kim

(57) **Abstract**

A system for generating electrical power using fuel cells having inlets for fuel and outlets for reaction products from the anode side of the fuel cells, said system comprising a source of fuel gas which can be oxidized by the fuel cell(s), pipes for conveying the gas from the source to the inlet of at least one fuel cell capable of producing electrical power by oxidizing the gas, wherein the outlet opening(s) from the anode side is(are) connected to one or more closed buffer container(s) downstream the fuel cell(s), and said buffer container comprises a closable outlet provides a fuel system which has no loss of hydrogen to the atmosphere/surroundings when operating the fuel cell(s) in "dead end"-mode.

## Description

### BACKGROUND OF THE INVENTION

### 1. Field of the Invention

The present invention relates to a system for generating electrical power using fuel cells and an improved method for generating electrical power using fuel cells, especially fuel cells fuelled by hydrogen.

Much effort has been made to provide energy in an efficient manner without creating environmental problems and also for providing vehicles having a very low consumption of fuel.

The use of fuel cells fuelled by hydrogen for producing electrical power are environmentally very desirable as they only produce water, which especially is desirable in densely populated areas.

The main goal of the present invention is to minimize or eliminate the losses of hydrogen when operating fuel cells fuelled by hydrogen

### 2. Description of the Related Art

When using fuel cells for producing electrical power from hydrogen it is often desired to minimize the loss of hydrogen to the atmosphere during operation by closing the fuel system and working in the so-called "dead-end"-mode in order to improve the overall efficiency of the fuel cell.

When closing the fuel system for "dead-end" operation, water diffused from the cathode to the surface of the anode when running the fuel cells is not immediately removed from the surface of the anode and will eventually "drown" and stop the fuel cell. Due to this fact it is common to remove water from the surface of the anode from time to time, normally by opening the system to the atmosphere/surroundings and applying a high flow of hydrogen over the cell surface for purging the water. Doing this there will inevitably be a loss of hydrogen together with the water.

It is an object of the present invention to provide a fuel system which has no loss of hydrogen to the atmosphere/surroundings when operating the fuel cell(s) in "dead end"-mode in order to improve the overall efficiency for the system and still being able to remove excess water from the anode surface.

### SUMMARY OF THE INVENTION

The present invention relates to a system for generating electrical power using fuel cells having inlets for fuel and outlets for reaction products from the anode side of the fuel cells, said system comprising a source of fuel gas which can be oxidized by the fuel cell(s), pipes for conveying the gas from the source to the inlet of at least one fuel cell capable of producing electrical power by oxidizing the gas, wherein the outlet opening(s) from the anode side is(are) connected to one or more closed buffer container(s) downstream the fuel cell(s), and said buffer container(s) comprise(s) a closable outlet.

In a second aspect the invention relates to a method for generating electrical power using a system comprising fuel cells having inlets for fuel and outlets for reaction products from the anode side of the fuel cells, said system comprising a source of fuel gas which can be oxidized by the fuel cell(s), pipes for conveying the gas from the source to the inlet of at least one fuel cell capable of producing electrical power by oxidizing the gas, wherein the outlet opening(s) from the anode side is(are) connected to one or more closed buffer container(s) downstream the fuel cell(s), and said buffer container(s) comprising a closable outlet, said method comprising operating a cyclic of supply of fuel to the system of the fuel cells and the closed buffer container(s) downstream the fuel cells until a predetermined upper pressure is reached, cutting off the supply of fuel and allowing the fuel cells oxidize at least a part of the fuel present in the fuel cells and the buffer container until a predetermined lower pressure is reached and repeating the cycle for the desired time of operating the fuel cells.

In a third aspect the invention relates to a method for running a system for generating electrical power using a system comprising fuel cells having inlets for fuel and outlets for reaction products from the anode side of the fuel cells, said system comprising a source of fuel gas which can be oxidized by the fuel cell(s), pipes for conveying the gas from the source to the inlet of at least one fuel cell capable of producing electrical power by oxidizing the gas, said method comprising intermittently supplying fuel into the system of the fuel cells and through the outlet opening(s) from the anode side being connected to a one or more closed buffer container(s) downstream the fuel cell(s), said buffer container(s) comprising a closable outlet, until a predetermined upper pressure is reached, cutting off the supply of fuel and allowing the fuel cells oxidize at least a part of the fuel present in the fuel cells and the buffer container until a predetermined lower pressure is reached and repeating the cycle for the desired time of operating the fuel cells.

### Brief Description of the Drawings

The invention is disclosed more in detail with reference to the drawings in which
Fig. 1 schematically shows a conventional system for "dead-end" operation of a polymer electrolyte membrane fuel cell fuelled with hydrogen,
Fig. 2 schematically shows a system according to the invention for "dead-end" operation of a polymer electrolyte membrane fuel cell fuelled with hydrogen,
Fig. 3 schematically shows an embodiment of a total fuel cell system according to the invention for "dead-end" operation of a polymer electrolyte membrane fuel cell fuelled with hydrogen,
Fig. 4 schematically shows an embodiment of a buffer container used according to the invention,
Fig. 5 schematically shows a diagram of the electrical system,
Fig. 6 schematically shows the transmission system,
Fig. 7 shows a side view of an embodiment of car according to the invention,
Fig. 8 shows a rear view of the embodiment of Fig. 7, and
Fig. 9 shows a front view of the embodiment of Fig. 7.

### Detailed Description of the Present Invention

The present invention relates to a system for generating electrical power using fuel cells having inlets for fuel and outlets for reaction products from the anode side of the fuel cells, said system comprising a source of fuel gas which can be oxidized by the fuel cell(s), pipes for conveying the gas from the source to the inlet of at least one fuel cell capable of producing electrical power by oxidizing the gas, wherein the outlet opening(s) from the anode side is(are) connected to one or more closed buffer container(s) downstream the fuel cell(s), and said buffer container(s) comprise(s) a closable outlet for separating liquid reaction products from fuel gas.

The system of the invention and the further aspects discussed below fulfil the objects of the invention. Furthermore, the use of fuel cells provides for high efficiency even in systems and plants of small sizes.

It is preferred that the closable outlet of the closed buffer container(s) is located at lowermost part thereof as gravity may then ensure separation, and liquid may be drained without loss of unreacted fuel gas.

In a preferred embodiment of the invention the system comprises a stack of fuel cells enabling generating power in an amount being practical for utilization.

Fuel cells to be used in accordance with the invention are suitably fuel cells capable of oxidizing hydrogen.

The source of fuel gas may e.g. be in the form of a pressurized source such as a pressurized hydrogen cylinder or in the form of complexes capable of absorbing and desorbing hydrogen such as sodium-borohydrides. Hydrogen may also be delivered from a compressor provided that the source of hydrogen is capable of delivering hydrogen at a minimum pressure corresponding to the maximum pressure of the design of the system and also of delivering the necessary flow.

A buffer system of the invention may comprise one or more buffer containers and they may be connected in series or parallel and have a common outlet or separate outlets as found appropriate. The buffer may alternatively be an internal part of the fuel cell system, e.g. one manifold for distributing the hydrogen to the cells of the stack may be enlarged and provided with a suitable space.

In a second aspect the invention relates to a method for generating electrical power using a system comprising fuel cells having inlets for fuel and outlets for reaction products from the anode side of the fuel cells, said system comprising a source of fuel gas which can be oxidized by the fuel cell(s), pipes for conveying the gas from the source to the inlet of at least one fuel cell capable of producing electrical power by oxidizing the gas, wherein the outlet opening(s) from the anode side is(are) connected to one or more closed buffer container(s) downstream the fuel cell(s), and said buffer container comprising a closable outlet, said method comprising operating a cyclic of supply of fuel to the system of the fuel cells and the closed buffer container(s) downstream the fuel cells until a predetermined upper pressure is reached, cutting off the supply of fuel and allowing the fuel cells oxidize at least a part of the fuel present in the fuel cells and the buffer container until a predetermined lower pressure is reached and repeating the cycle for the desired time of operating the fuel cells.

In a preferred embodiment of the invention excess water from the anode purged into the buffer is drained from the buffer container by opening the closable outlet of the buffer container, letting out water, and closing the outlet before fuel escapes therethrough.

Fuel cells to be used in the method of the invention are suitably fuel cells capable of oxidizing hydrogen.

In a third aspect the invention relates to a method for running a system for generating electrical power using a system comprising fuel cells having inlets for fuel and outlets for reaction products from the anode side of the fuel cells, said system comprising a source of fuel gas which can be oxidized by the fuel cell(s), pipes for conveying the gas from the source to the inlet of at least one fuel cell capable of producing electrical power by oxidizing the gas, said method comprising intermittently supplying fuel into the system of the fuel cells and through the outlet opening(s) from the anode side being connected to a one or more closed buffer container(s) downstream the fuel cell(s), said buffer container comprising a closable outlet, until a predetermined upper pressure is reached, cutting off the supply of fuel and allowing the fuel cells oxidize at least a part of the fuel present in the fuel cells and the buffer container until a predetermined lower pressure is reached and repeating the cycle for the desired time of operating the fuel cells.

In a preferred embodiment of the method water excess water from the anode purged into the buffer is drained from the buffer container by opening the closable outlet of the buffer container, letting out water, and closing the outlet before fuel escapes therethrough.

Fuel cells to be used in accordance with the invention are suitably fuel cells capable of oxidizing hydrogen.

The methods of the invention may be worked by controlling the pressure of the fuel gas to an interval from 0 bar gauge relatively to the cathode side and up to the maximum pressure tolerated by the fuel cells used. It is even contemplated that an under pressure may be used, the lower limit of which will be determined by the strength of the fuel cells.

The methods of the invention may suitably be worked by controlling the pressure of the fuel gas at the anode side to an interval from 0.3 to 0.5 bar (gauge relatively to the pressure at the cathode side).

In a fourth aspect the invention relates to a vehicle provided with an electrical motor and a system for generating electrical power using fuel cells having inlets for fuel and outlets for reaction products from the anode side of the fuel cells, said system comprising a source of fuel gas which can be oxidized by the fuel cell(s), pipes for conveying the gas from the source to the inlet of at least one fuel cell capable of producing electrical power by oxidizing the gas, wherein the outlet opening(s) from the anode side is(are) connected to one or more closed buffer container(s) downstream the fuel cell(s), and said buffer container comprises a closable outlet.

A vehicle according to the invention may be any vehicle traditionally driven by a combustion engine such as a truck, a car, or a motor cycle.

In a fifth aspect the invention relates to a stationary power plant provided with a system for generating electrical power using fuel cells having inlets for fuel and outlets for reaction products from the anode side of the fuel cells, said system comprising a source of fuel gas which can be oxidized by the fuel cell(s), pipes for conveying the gas from the source to the inlet of at least one fuel cell capable of producing electrical power by oxidizing the gas, wherein the outlet opening(s) from the anode side is(are) connected to one or more closed buffer container(s) downstream the fuel cell(s), and said buffer container comprises a closable outlet.

A stationary power plant according to the invention may be a plant for producing electricity and heat for one or more individual residences or houses or a light house or in the form of a portable or stationary power unit for use e.g. occasional need of power in uninhabited areas not provided with power supply. An alternative use is in space industry. Due to the higher efficiency of the fuel cells when working "true dead end" the required amount of hydrogen for a given time of service is reduced. This must be balanced against the required space for the buffer container.

### Description of the Preferred Embodiments

The invention is now explained more in detail with reference to the drawings showing preferred embodiments of the invention, which, however, are not to be considered as limiting of the scope of the invention set forth in the appended claims.

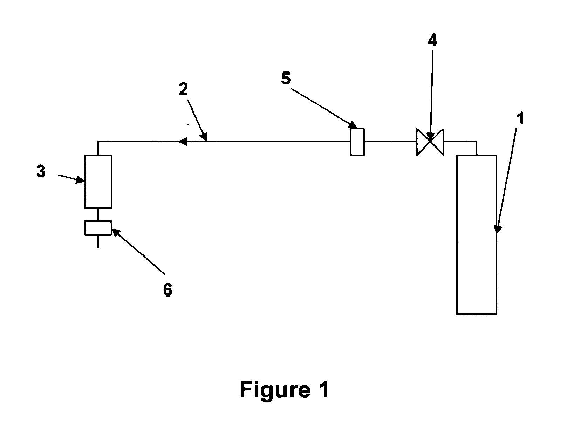

Reference is made to Fig. 1 schematically showing a conventional system for "dead-end" operation of a stack of polymer electrolyte membrane fuel cells (PEMFC) fuelled with hydrogen.

A system for conventional dead-end operation of one or a stack of PEMFCs using hydrogen as fuel, or other low temperature fuel cells where accumulation of water can occur, comprises a cylinder **1** for storing and delivering hydrogen, piping **2** for conveying hydrogen to a stack of PEMFCs **3,** said piping comprising a first reduction valve **4** for reducing the pressure of the fuel and optionally a second reduction valve **5** if needed for further reducing the pressure of hydrogen. However, when closing the fuel system (for "dead-end" operation) water collected on the anode will not be removed form the surface of the anode and will eventually "drown" the fuel cell. Hence, at intervals a high flow of hydrogen over the cell surface is used to remove excess water. At the hydrogen exit of the fuel cell (FC) is placed a valve **6,** typically a solenoid valve, for purging water formed at the surface of the anodes and inevitably also hydrogen when applying a high flow of hydrogen over the cell surface.

In conventional dead-end the secondary reduction valve is used to reduce the pressure to the limit tolerated by the FC (for instance 0.5 bar, gauge relative to the cathode) or lower. The reduction valves ensure that hydrogen is fed to the FC when the FC consumes hydrogen. In order to remove the water accumulated on the anodes, the solenoid valve will open shortly and purge hydrogen and water into the atmosphere. This purge can be controlled in a manner known per se by a timer, the cell voltages of the FC as this voltage will drop as water is accumulated on the anode, or both.

The loss of hydrogen during purging water in conventional "dead-end" operation of fuel cells is normally up to 5 %.

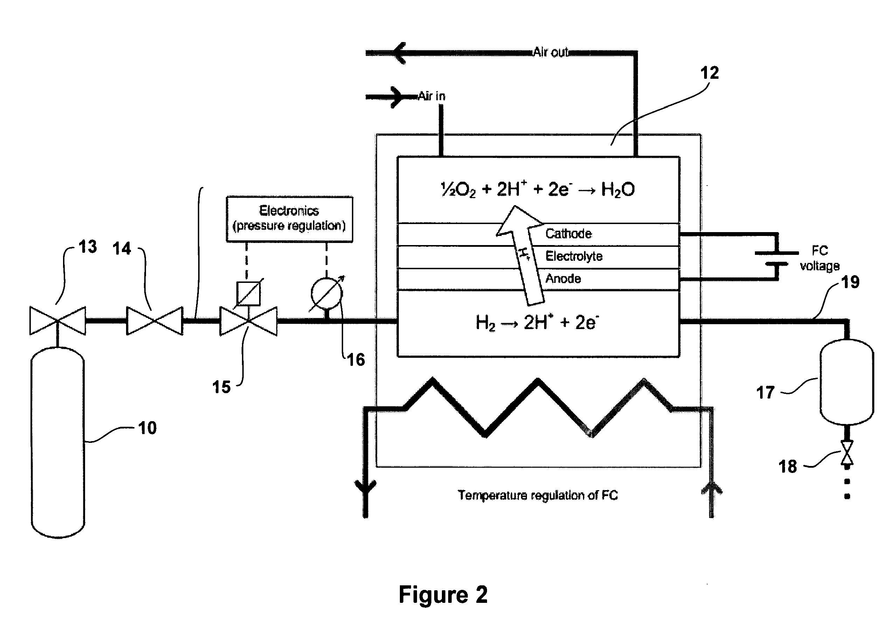

Fig. 2 schematically shows a system according to the invention for "dead-end" operation of a polymer electrolyte membrane fuel cell fuelled with hydrogen.

A system of the invention for dead-end operation of one or a stack of PEMFCs using hydrogen as fuel, or other low temperature fuel cells where accumulation of water can occur, comprises a cylinder 10 for high pressure storing and delivering hydrogen, piping 11 for conveying hydrogen to a stack of PEMFCs 12, said piping comprising a first reduction valve 13 for reducing the pressure of the fuel from the high pressure of the cylinder to a gauge pressure of approximately 1 bar and optionally a second reduction valve **14,** in case that the first reduction valve cannot reduce the pressure directly from the high pressure to 1 bar. The first reduction valve normally reduces the hydrogen pressure to 5 bar. The second reduction valve then reduces the pressure to 1 bar. If the first reduction valve is able to reduce the pressure to 1 bar, the second reduction valve is superfluous. A pressure of 1 bar at the exit of the reduction valve does not give a pressure of 1 bar at the anode side as the pressure regulation system closes the valve before a pressure of 1 bar is reached. The pressure at the outlet of the valves thus controls the flow when the solenoid valve is opened.

At the hydrogen exit of the stack of fuel cells (FC) is placed a buffer container 17 for receiving water purged from the surface of the anodes and acting as a buffer for hydrogen fuel for the FC. The buffer 17 is provided with a water draining valve 18. The exit of the FC is connected to the buffer via a conduit 19.

After (downstream of) the reduction valves a solenoid valve **15** (normally closed) is located, and downstream of that a pressure transmitter **16** is placed. The pressure transmitter measures a pressure and if the pressure drops below a first set value (e.g. 0.3 bar gauge pressure) a relay is activated activating the solenoid valve which then opens. The valve is kept open until the pressure reaches a second set value (e.g. 0.5 bar gauge pressure), and then the relay is deactivated and the solenoid valve closes. The hydrogen in the stack of fuel cells and the piping and buffer is reacted with oxygen in the FC **12** producing electricity, heat and water. The water is formed on the cathode but a part thereof will diffuse to the anode. The water is removed from the anode when purging hydrogen through the FC and into the buffer. In the buffer, the liquid water is separated and collected and some of the aqueous vapour condensates. Thus, purging of water from the anode is carried out each time fuel gas is fed to the system of the invention. The hydrogen is temporally stored in the buffer and will return to be reacted in the FC as the hydrogen is used and the pressure drops.

The fuel system of the invention is constructed with the purpose of minimizing or avoiding loss of hydrogen to the atmosphere/surroundings when operating the fuel cell(s). Thus, the overall efficiency for the system will rise.

A further advantage obtained by the present invention as compared to conventional "dead-end" operation of a PEMFC system is that the hydrogen used by the FC is preheated and humidified in the buffer further improving the performance of the cell.

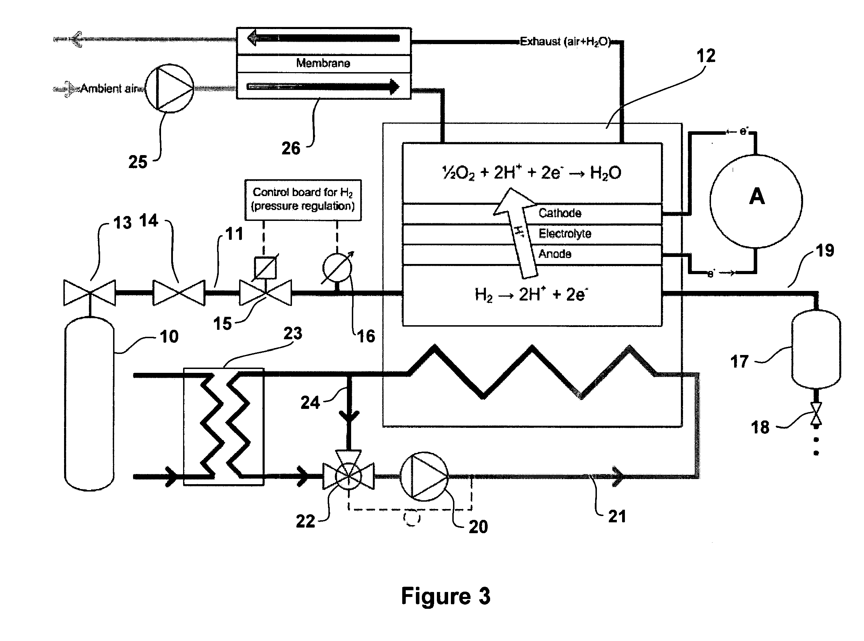

Figure 3 shows embodiment of a total fuel cell system according to the invention for "dead-end" operation of a polymer electrolyte membrane fuel cell fuelled with hydrogen.

A total system of the invention for dead-end operation of one or a stack of PEMFCs using hydrogen as fuel, or other low temperature fuel cells where accumulation of water can occur, comprises the same elements shown in figure 2, viz. a cylinder **10** for high pressure storing and delivering hydrogen, piping **11** for conveying hydrogen to a stack of PEMFCs **12,** supplying voltage for driving an electrical system **A,** said piping comprising a first reduction valve **13** for reducing the pressure of the fuel from the high pressure of the cylinder to a gauge pressure of approximately 1 bar and optionally a second reduction valve **14** if needed for further reducing the pressure of hydrogen. At the hydrogen exit of the stack of fuel cells (FC) is placed a buffer container **17** for receiving water purged from the surface of the anodes and acting as a buffer for hydrogen fuel for the FC. The buffer **17** is provided with a water draining valve **18.** The exit of the FC is connected to the buffer via a conduit **19.**

After (downstream of) the reduction valves a solenoid valve **15** (normally closed) is located, and downstream of that a pressure transmitter **16** is placed. The pressure transmitter measures a pressure and if the pressure drops below a first set value (e.g. 0.3 bar gauge pressure) a relay is activated activating the solenoid valve which then opens. The valve is kept open until the pressure reaches a second set value (e.g. 0.5 bar gauge pressure), and then the relay is deactivated and the solenoid valve closes.

The hydrogen in the stack of fuel cells and the piping and buffer is reacted with oxygen in the FC **12** producing electricity, heat and water. The water is formed on the cathode but a part thereof will diffuse to the anode. The water is removed from the anode when purging hydrogen through the FC and into the buffer. In the buffer, the liquid water is separated and collected and some of the aqueous vapour condensates. Thus, purging of water from the anode is carried out automatically each time fuel gas is fed to the system of the invention without the need of a separate purge control system. The hydrogen is temporarily stored in the buffer and will return to be reacted in the FC as the hydrogen is used and the pressure drops.

Furthermore, a total system according to the invention comprises a system for cooling the stack of fuel cells. The cooling system comprises a water pump **20** for circulating cooling water in a piping system **21,** a mixing valve **22** with a thermo sensor and a heat exchanger **23,** e.g. for exchange with air by convection. The mixing valve is used to keep a constant specified temperature in the FC (in the present case about 70° C) independent of the cooling demand utilizing a bypass **24.**

A total system further comprises an air supply system comprising a compressor **25** supplying a flow of ambient air to the fuel cell. Before entering the fuel cell, the air passes through a humidifier **26,** wherein moisture from the exhaust air is transported to the incoming air through a membrane. The humidifier also works as a heat exchanger preheating the incoming air. The output of the compressor, i.e. the flow of air, is controlled in a manner known per se to ensure that air is supplied to the FC in an amount matching the current drawn from the FC. This ensures a constant excess of air and thus, oxygen. When operating the FC at a very low load, i.e. low flow of air as compared to the stack design, it is preferred also to utilize the air supply for purging (operate at a high airflow for a few seconds) in order to remove excess water from the cathode surfaces. Then, the compressor purges in specified intervals or whenever the voltage over at least one of the fuel cells drops below a specified value.

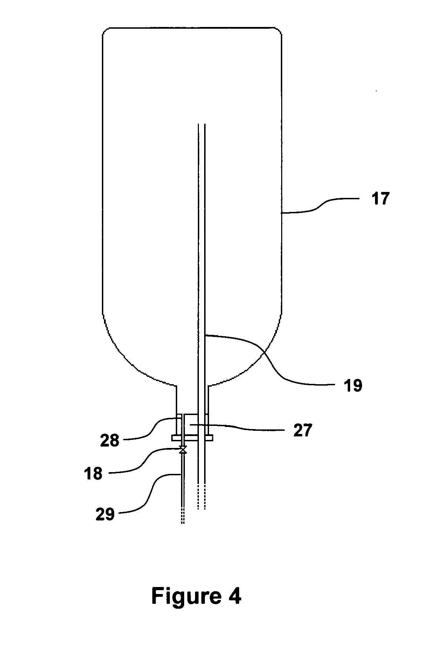

Fig. 4 schematically shows an embodiment of a buffer container used according to the invention.

A Teflon® pipe **19** leading from the FC is led through a Teflon® plug **27** filling the opening of a bottle forming the buffer **17,** said buffer being placed with the opening as the lowermost point. The pipe **19** ends close to the bottom of the bottle, i.e. opposite the opening. At the opening of the bottle in order to enable draining of water from the bottle, a valve **18** is connected to a small port **28** in the Teflon® plug, and a hose **29** with a small diameter is connected to this valve for draining water. The bottle may be slanting and is preferably placed vertically in order to avoid separated water from re-entering the FC through the main pipe **19,** and also in order to be able to remove water through the valve **18** without loss of hydrogen.

The buffer is preferably capable of withstanding a pressure somewhat higher than normal working pressure, e.g. 2 bars gauge pressure.

The invention is explained more in detail with reference to a preferred practical embodiment of the invention. This embodiment is not to be construed as limiting the scope the invention as defined in the appended claims.

### Example

Construction of a test concept car and testing of the system of the invention.

The fuel cell system shown in Figure 3 was used in the construction of an urban concept car utilizing fuel cells fuelled by hydrogen, the main goal being to build a very fuel efficient car, but still retain realistic dimensions and functions for later certification for use on public roads. The two most important factors in the development of the above described system for the car were to obtain no loss of hydrogen and optimal efficiency of the fuel cells. Additionally low weight and efficient system components were aimed at.

The power system of the car is described in detail in below.

This urban concept car turned out to be very efficient and won two fuel economy competitions "Shell Eco-Marathons 2005" in Nogaro, France, and Ladoux, France. It was possible to drive officially 671 km/l gasoline equivalent (kilometres per litre 95-octane petrol energy equivalent) in an international contest in the urban concept class. These results were by far the best ever obtained in the urban concept class (number two drove 425 km/l gasoline equivalent). The concept car also won the class in further races.

The car was powered by a permanent magnet DC motor running on electrical power supplied by a hydrogen fuelled PEM fuel cell stack. The combination of fuel cell stack and DC motor operated with a high total efficiency relative to power systems based on conventional combustion engines. In order to operate the fuel cell stack at high efficiency, a cooling system was used to keep the stack at constant optimum temperature by circulating water through the stack. An air supply system maintained constant excess air ratio in the stack and ensured an optimum humidification on the cathode side and temperature of the air inlet. The hydrogen supply system avoided losses of hydrogen to the exhaust and kept optimum humidification on the anode side.

Throughout the development of the power system, simplicity has been an important factor in order to avoid losses in unnecessary parts.

In the development of the car, all decisions concerning component sizes and dimensions were evaluated using a mathematical model. In addition to the power system, the model simulated the whole car, i.e. taking into account wind resistance, rolling friction and gravitational resistance in a manner known per se.

The model simulated a fuel consumption corresponding to 756 km/litre at an average speed of 31.6 km/h and practical results, at an average speed of 30.5 km/h in Nogaro, produced a fuel consumption corresponding to 731 km/litre. Later practical results at an average speed of 46 km/h produced a fuel consumption corresponding to 523 km/litre in Ladoux where the model simulated 495 km/litre and 47.8 km/h.

### General system description

The heart of the test concept car was the use of a PEM fuel cell stack (FC) in combination with a buffer. A DC motor running on electricity delivered from the FC provides the propulsion. The FC was operated on hydrogen and atmospheric air. The fuel cell car was designed to have as good a fuel economy as possible. In order to run the fuel cell stack, several auxiliary systems around the stack had to be provided. These systems were the hydrogen supply, the air supply, the cooling, and the electrical systems. On top of this a monitoring and control system was installed to ensure that the stack was operated under optimum conditions.

### The PEM Fuel Cell Stack

The fuel cell stack (FC) used consisted of a series of Polymer Electrolyte Membrane Fuel Cells (PEMFC) produced by IRD Fuel Cells A/S, Kulling-gade 31, DK-5700 Svendborg, Denmark.

The FC-stack used consisted of 35 PEMFC's having a nominal effect of approximately 2 kW_{θ}. In the present case the FC-stack was operated in true dead-end mode i.e. with no excess of hydrogen (λ-H₂ = 1). Primarily the FC-stack was operated at low loads (approximately 250 W), which resulted in a high efficiency (approximately 68%).

The dimensioning was made to obtain a high efficiency and, at the same time, as low weight as possible. It was chosen to deliver a voltage of 24-30 V at a load of 100 - 1000 W in order to allow the use of standard 24 V components. Thus, DC-DC converters giving losses may be avoided. The use of a 48 V system would demand the use of a larger and heavier stack of fuel cells and it was refrained from using such a system in the present case due to the low expected load not justifying the use of a larger stack of fuel cells which in other instances might be more advantageous.

### Humidification of the anode

A PEMFC has to be operated with a certain balance of water. It is essential to control this balance of water on both the anode and the cathode sides. The water is produced on the cathode side but some of the water diffuses through the proton-exchanged polymer membrane and will accumulate on the surface of the anode. Both a too dry and a too wet cell surface result in a drop of the voltage, i.e. giving a lower efficiency. Thus it is necessary to purge the anode side occasionally when operating in dead-end mode in order to avoid accumulation of water. According to the invention the balance of water on the anode side is controlled by the purging through the FC and into the buffer. The purging is controlled by the pressure regulation described above. When purging is carried out excess water is carried from the surface of the cell into the buffer. The purging through the stack and into the buffer cannot effect a drying up of the cells because the hydrogen is sufficiently humidified in the buffer from which it streams back during operation of the FC (contrary to traditional dead-end-mode).

### The buffer

A 5 litre recycled bottle made of thick-walled HDPE (wall thickness approximately 3.5mm), which is a good material for storing hydrogen (low diffusion rate) was used as a buffer container. In order to provide a gas-tight closure of the bottle, a Teflon@ plug was provided for insertion in the entrance of the bottle. A plug having a diameter of approximately 48.5 mm and being provided with a protruding flange having an outer diameter of 54 mm which flange can be squeezed between a lid and the top surface of the bottleneck was made to fit the dimensions of the inside of the bottle entrance. Through this plug two holes with ¼" NPT and 1/8" NPT internal threads were drilled. At the inside of the bottle, at the large bore, a clamp fitting was screwed into the plug and a Teflon® pipe was inserted through this in order to seal the entrance. At the entrance of the other bore a valve was placed and connected to a narrow Teflon® hose (outer diameter=3mm).

The dimensions and the materials of the buffer are not crucial but the buffer must fulfil the following demands:
It must be hydrogen tight and show low diffusion rate;
It must be pressure resistant;
It must be possible to drain water (preferably without loosing hydrogen);

The hydrogen inlet/outlet must be located so as to prevent water from re-entering the FC

In order to be able to have a higher content of water vapour in the hydrogen the buffer was insulated. The hydrogen gas in the buffer is saturated with water since liquid water is present in the buffer. A higher temperature in the buffer leads to higher water content in the hydrogen, which provides an overall improvement of the performance of the FC.

The buffer was pressure tested to 2 bars gauge pressure. A buffer according to this embodiment was sufficient for running the Shell Eco-marathon without having to drain water from the buffer. At this load a buffer according to this embodiment was sufficient for running for more than a day. The Shell Eco-marathon only lasted about an hour, and the results of 671 km/litre and 730 km/litre were calculated.

### The following components were used:

Clamp fitting: An 8 mm O.D. - 1/4" MNPT available from Dansk Ventil og fitting, Porthusvej 7A, DK- 3490 Kvistgaard was used.

Valve: A 1/8" MNPT thread Needle valve, 3mm ring fitting exit available from Dansk Ventil & Fitting ApS, Porthusvej 7A, DK- 3490 Kvistgaard was used.

Bottle: A 5 litre HDPE bottle available from Accoat A/S, Munkegårdsvej 16, DK-3490 Kvistgård was used.

Teflon® pipe: A pipe having an outer diameter of 8mm available from Accoat A/S, Munkegårdsvej 16, DK-3490 Kvistgård was used.

Teflon@ plug: As described above available from Accoat A/S, Munkegårdsvej 16, DK-3490 Kvistgård was used.

### The hydrogen supply system

The hydrogen system is a "true" dead end system, which means there is no loss of hydrogen as seen with traditional dead end systems.
The hydrogen was supplied from a pressurized cylinder and this cylinder was connected to a primary and a secondary reduction valve. The secondary reduction valve was included in order to avoid damaging the fuel cell stack due to overpressure. A solenoid valve was installed to enable automatic and manual emergency shut down besides regulating the pressure downstream the solenoid valve. As a safety measure a hydrogen detector was installed in the top of the power train compartment, said detector releasing an alarm and closing the solenoid valve in case of a hydrogen leakage or if the battery voltage supplied to the detector dropped below 10 V.

### The following components were used:

### Hydrogen cylinder and utilities:

The hydrogen was stored in a conventional hydrogen cylinder at 200 bars. 1 or 5 litre cylinders where used (5 L cylinder from AGA A/S). For the competition a lightweight (0.8 kg) 1 litre cylinder capable of withstanding a maximum pressure of 300 bars was used. The 1 litre lightweight cylinder was made by Luxforgascylinders and is available from Strandmøllen Gas A/S. The fitting on the cylinder was according to Danish standard. A primary pressure regulator (model: AHL 16/25, Air Liquide Danmark A/S) was connected to the hydrogen cylinder and reduced the pressure to about 5 bar. Then a secondary pressure regulator (model: BS 20-1-2, Air Liquide Danmark A/S) reduced the pressure to 1 bar.
Due to safety regulations in the Shell Eco-Marathon the pipes used for hydrogen were made from stainless steel or Teflon® material. The stainless steel pipes (1/8" and ¼") were used to connect the pressure regulators, the solenoid valve and pressure transmitter to each other. After the pressure transmitter a clamp ring fitting (8CM2316MC) connected the steel pipe to the Teflon® pipe. The Teflon® pipe (inner diameter: 6 mm) was connected to a double clamp ring fitting (25CF8316ME and 8CM8316ME from Dansk Ventil & Fitting Aps) placed on the hydrogen inlet of the FC (the hydrogen inlet on the FC is a composite tube with an outer diameter of 25 mm). The same type of double clamp ring fitting was placed on the exit of the FC and a Teflon® pipe connected the exit of the FC to the buffer.

The volume of hydrogen between the secondary pressure regulator and the solenoid valve was reduced to a minimum in order to minimize the pressure wave resulting from the opening of the solenoid valve. The pressure wave was also damped by the Teflon® pipe because of the length of the pipe and the small diameter.

### Reduction valves:

AirLiquide Model AHL 16/25 (reducing the pressure to about 5 bars) AirLiquide Model BS20-1-2 (reducing the pressure to about 1 bar)
**Gas detector:** Available from Duotec, Phone +45 43459188
Solenoid valve: Available from Granzow, DK-2600 Glostrup, Denmark
**Pressure transmitter:** Available from Hans Buch, A/S, Roskildevej 8 - 10, DK-2620 Albertslund, Denmark.

### Solenoid valve and pressure transmitter

The FC is capable of withstanding a pressure difference of 0.5 bar between the cathode and the anode sides. This gives a potential gauge pressure interval (relative to the cathode side) from 0.0 to 0.5 bar in which the buffer can be operated. In the present embodiment the operating interval was chosen to 0.3 - 0.5 bar. To control the pressure, a pressure transmitter and a solenoid valve kept the gauge pressure in the interval. The interval may be chosen from 0 - 0.5 bar if the strain on the cells due to the greater pressure changes does not go beyond the tolerance of the FC.

The pressure transmitter was a pressure transmitter HC69191100118 from Huba Control Headquarters, Industriestrasse 17, CH-5436 Würenlos, Switzerland and is available from Hans Buch, A/S, Roskildevej 8 - 10 DK-2620 Albertslund, Denmark. The transmitter is capable of measuring a relative pressure from 0 to 1 bar compared to the ambient air, with a response time of <0.5 ms and an accuracy of ±0.3 %. The connection to the hydrogen system was made with a G ¼" fitting. The pressure transmitter was supplied with 18 to 33 VDC and gave an output signal between 0 and 10 VDC with a linear correlation to the pressure measured. If the output signal was beneath 3 V (corresponding to 0.3 bar) a relay would open and a potential difference of 12 VDC would be applied over the solenoid valve. The solenoid valve was from Parker Lucifer SA, Fluid control Division Europe, CH-1227 Carouge-geneve, Switzerland and is available from Granzow A/S, Ejby industrivej 26, DK-2600 Glostrup, Denmark. It was normally closed. When the voltage is applied the solenoid valve opened and the hydrogen could flow through the FC and into the buffer. When the voltage reached 5 V (corresponding to 0.5 bar), the relay closed and the solenoid valve closed. The solenoid valve had a port size of 1/8" and when it was open the mean hydrogen flow was approximately 5 normal litres/s and it took approximately 0.2 seconds to raise the pressure from 0.3 to 0.5 bar downstream the solenoid valve.

Some of the parameters above can be varied with consequences for the other parameters:
By increasing the flow of hydrogen (by adjusting the pressure regulators) the time to fill the buffer will decrease. This flow has to be around 5 normal litres /s or higher in order to effectively remove the water film from the anode surface in the FC.

The time between purges was approximately 25 seconds at a current of 10 A and 35 cells determined by the buffer size and the pressure interval.

By increasing the volume of the buffer or the pressure interval, the time to fill the buffer and the time between purges, will increase. The time between purges had to be relatively short in order to prevent water from accumulating on the surfaces of the cells between purges.

### The Air supply system

A compressor, Product SGP 16 having a nominal input of 0.14 kW and a weight of 2.6 kilograms available from Rietschle Thomas through Poul Pedersen, supplied the air to the fuel cell. Before entering the fuel cell, the air passed through a humidifier in which the moisture from the exhaust air is transferred to the incoming air through a membrane. The humidifier also worked as a heat exchanger preheating the incoming air. The humidifier delivered together with the fuel cell stack was chosen to have a low drop of pressure for reducing the loading of the compressor and to ensure a high flow of air during purge on the cathode side. It consisted of a number of membranes permeable to water and conducting heat. The weight of the humidifier was about 7 kilograms.

The output of the compressor, i.e. the flow of air, is controlled in a manner known per se to ensure that air is supplied to the FC in an amount matching the current drawn from the FC. This ensures a constant excess of air. Due to the relatively small electrical load on the FC, i.e. low flow of air, as compared to the stack design, it is preferred to purge (operate at a high airflow for a few seconds) in order to remove excess water from the cathode surfaces. The compressor purges at specified intervals (for instance every 4^{th} minute) or whenever the voltage over one of the 35 fuel cells drops below a specified level of suitably 0.3 V (V_{ocv} ≈ 1V).

This design of the fuel cell system makes it possible to operate the FC in a broad range of temperatures - from about room temperature to about 85 °C. It will however be required to purge more frequently using the incoming air if the working temperature is low, because more liquid water will then accumulate on the surface of the cathode.

### The Cooling system

The cooling system consisted of a small water pump, a mixing valve and a heat exchanger. The mixing valve was used to keep a constant specified temperature inside the FC (about 70° C) independent of the cooling demand.

A suitable pump should deliver between 1 and 2 litres per minute because the temperature gradient between the inlet and outlet of cooling water should not exceed 5 °C in order to keep a uniform temperature and performance of the stack. The pump should overcome a pressure drop of approximately 200 millibar. At the same time it was desirable that the pump could be powered by the stack delivering a voltage of 20 to 35 V depending of the load. A preferred pump was an IWAKI SS-15K-2D available from IWAKI Pumper A/S, Vølundsvej 12, DK-3400 Hillerød, Denmark - a 24 Volt magnetically driven pump having a maximum pressure of 200 millibar and a pressure of about 180 millibar at a flow of 2 litres per minute. The pump consumes about 10 W at the desired load.

In the test concept car there was no need for cooling of the FC when driving at 30 km/h (driving speed at Shell Eco-marathon) because of the very limited load. Instead, water was just circulated through the stack to equalize the temperature in the FC. The mixing valve and the heat exchanger were removed, and only the pump was used.

The cooling system illustrated in Figure 3 was included to illustrate how the system can work at higher loads than under the Shell Eco-marathon e.g. in a commercialized vehicle.

### Monitoring of Cells

In order to monitor the cells two monitoring systems were set up. One preliminary system was used for initial optimization of the stack of fuel cells before the installation thereof in the car.

The monitoring systems monitored the voltage over the individual cells in a manner known per se giving a picture of the condition of the stack of cells. Each cell had an OCV (open circuit voltage - i.e. when no current was drawn) of about 1 Volt. The first monitoring system used zero as a reference. This means that each measurement showed the total voltage over the previous cells of the stack (at cell 30 the OCV is about 30 volt etc.). These voltages were subtracted for giving the voltage over each cell. The results were shown graphically in "real time" at a computer using the program Pico Log. This rendered it possible to observe the effect on the cell voltage (efficiency being directly proportional to the cell voltage) resulting from modifying different parameters. These results enabled a manual adjustment. In one embodiment the monitoring utilized three versions of the program Pico Log. The two first versions monitored the cell voltage, and the third monitored the temperature at different places before and after the stack.

The monitoring during running the car was not printed out and the control was made using a micro processor. The voltages detected may be written out, if desired, through a serial cable and be viewed in a hyper terminal. (Only in "real time"). Each determination gave a voltage over the individual cell. The results were transmitted to a micro processor controlling in a manner known per se whether to purge using extra air. Furthermore, the micro processor adjusted the flow of air in a manner known per se in accordance with the current drawn from the stack.

### Operation of the Fuel Cell Stack

It has been found that in order to ensure optimum operation of the stack, the excess of air ratio should be about 2.5. At this excess air ratio the cells are not too wet or too dry to ensure optimum operation. The challenge was to control the amount of water at the cell surfaces when running the stack of cells at a relatively low load as compared to the nominal capacity of the stack when the car was running at 30 km/h. This rendered it hard to keep a sufficiently high temperature of the stack (running optimal at 70 degrees Celsius) and to have sufficiently high flow of air to blow off surplus of water without drying the cells. In order to blow off surplus of water on the cathode side the flow of air was set to maximum for 4 seconds every 4 minutes (purge). If one cell becomes too wet, it will result in a quick drop in voltage over the cell and return to the normal voltage after a purge whereas a gradual drop in voltage is observed if the cell becomes too dry. In the last case, a purge will worsen the situation and the voltage will continue to drop.

### If the cells are run optimal, the risk of drying the cells is quite low

### Directions of Flow

The manifolds of the stack of fuel cells are through-going and thus, more options for supplying hydrogen, air, and water into and out from the stack exist. There is an inlet and an outlet manifold for each of these fluids. They may be opened at the desired end plates. Considering the space available in the car it was decided that air should enter and leave the stack at the same end plate (U flow) whereas the hydrogen and the cooling water should enter in one end plate and leave at the opposite (Z-flow). Furthermore, all three fluids are running in co-flow, which means that all the fluids move in the same direction across the cells. It was chosen that the entrances should be at the top of the stack and the exits at the bottom.

The orientation of the cell stack was chosen so that the flow of hydrogen and air should be vertically down the cells in order for gravity to assist in removing water from the cells.

### The Electrical system

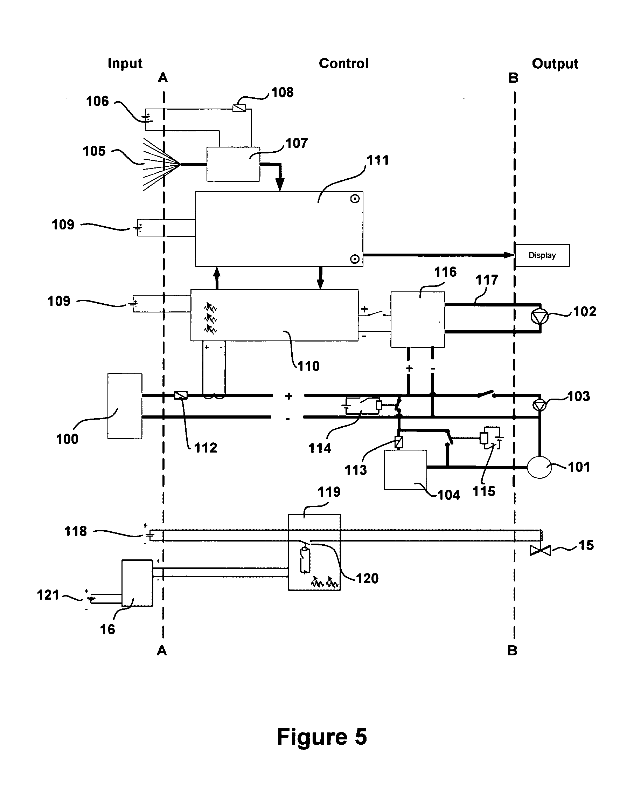

The electrical system shown in Figure 5 schematically shows input left of the dotted line **A-A**, the control system in the middle and output to the right of the dotted line **B-B.** The stack of 35 PEM fuel cells **100** was placed in parallel with three electrical components: the DC motor **101,** the compressor **102** and the water pump **103.** The system was not provided with conversion of the electrical power from DC to AC (besides the compressor) or DC to DC in order to avoid losses. For start-up and for low speeds a motor speed controller (MSC) **104** was used. This component was bypassed when driving at maximum (normal) speed in order to reduce losses. Individual input from the 35 fuel cells is received at **105.** A 24 V battery pack 2 **106,121** provides power to Cell Voltage Monitoring Boards **107** protected by a fuse **108.** A 12 V battery pack **109,118** provides power to an adjusting board **110** and to a main control board **111.** The micro processor on the main control board **111** exchanges data with the adjusting board **110** and the Cell Voltage Monitor Boards **107.**

A main 70 A fuse **112** is placed after the stack of fuel cells and a further 25 A fuse **113** protects the MSC. In the motor circuit are furthermore a relay **114** and a by-pass relay **115.** Furthermore, the system comprises a control board and DC-AC converter **116** and an AC power supply **117** for the compressor.

Furthermore, the 12 V battery pack **109,118** provides power to the control board for hydrogen **119** comprising a relay **120** for controlling the flow of hydrogen through the solenoid valve **15** in response to the input from the pressure transmitter **16.** The pressure transmitter is powered by a 24 V battery pack **106,121.**

### Batteries

Auxiliary batteries were used for powering lights and electronic equipment for monitoring the cells.

Several options were considered in view of an optimization view with respect to weight and volume. Traditional lead batteries are very heavy and lighter batteries were preferred. Lithium ion batteries are light, more expensive and more advanced, i.e. a security circuit must often be provided for protection against short circuits. A new type of lithium ion batteries not requiring a security circuit for the present purpose was chosen, said batteries being available from AC-TEC A/S, Alsvej 5, DK-8900 Randers, Denmark. The battery packs were made from small cells connected in series and in parallel according to the desired total battery's voltage [V] and capacity [Ah]. This type of lithium ion battery cells had a voltage of 3.6 V and a capacity of 1600 mAh
It was estimated that battery pack 1 should have a capacity of about 4400 mAh and that battery pack 2 should have a capacity of about 1000 mAh. For security reasons the battery packs were made with some extra capacity, i.e. 8000 mAh and 1600 mAh, respectively.

In order to make these battery packs from the lithium ion battery cells of 3.6 V and 1600 mAh the cells were connected in different combinations in series and in parallel. Battery pack 1 consisted of 3 cells in series in order to obtain a voltage of 10.8 V, and 5 cells in parallel in order to increase the capacity to 8000 mAh - in total 15 battery cells. Battery pack 2 only consisted of 7 cells in series in order to obtain a voltage of 25.2V and, in order to keep a capacity of 1600 mAh - in total 7 battery cells were used.

The weight of each lithium ion battery cell is 44 grams, i.e. battery pack 1 had a weight of 660 grams plus wrapping - in total about 700 grams - and battery pack 2 had a weight of 308 grams plus wrapping - in total about 350 grams. Thus, the total weight of batteries of the car was only 1050 grams. For comparison, a lead 12 V battery for scooters having a capacity of 8000 mAh weighs about 4 kilograms - and then the 24V battery of capacity of 1600 mAh still has to be added.

The time for charging of battery 1 pack using a 12V DC car battery was about 3 to 4 hours at a charging current of 4 A, and the time for charging battery pack 2 using a charger connected to the net of 230 V AC was about 1 hour at a charging current 1,5-2A.

### The Motor

The motor used was a permanent magnet DC motor. The motor was procured from Lenze through the Danish sales department. The motor had a performance of about 3/4 hp and was chosen due to its performance, because it was suitable for the needs of the car, and due to the good efficiency. The idle number of revolutions was about 2900 RPM.

### Motor Speed Controller

The test concept car was constructed in such a manner that the motor was not to be adjusted during running. Thus, the motor was coupled directly to the fuel cell stack. When accelerating from standstill to the desired steady state velocity it was necessary to use an adjustment for limiting the current drawn from the stack of fuel cells by the motor. For this purpose a motor speed controller (MSC) from 4QD-TEC available from RS-Components was used. After the MSC had brought the car to the desired velocity, the unit was disconnected in that a relay closes a by-pass of the MSC. This is effected by activating a contact,"BYPASS" at the instrument panel of the car. The principle of operation is known per se and as disclosed at http://www.4gdtec.com/pwm-01.html. (An extract of the relevant passages is enclosed as Appendix A) It is possible to adjust the maximum current which the motor is allowed to draw directly at the MSC in order to adjust rate of acceleration. Doing this the heating of the MSC during running must be considered as the MSC will automatically be shut off if it becomes too hot. For cooling the MSC a fan was provided. The MSC was controlled using a turning knob at the instrument panel of the car. This knob functioned as an accelerator of the car. When disconnecting the MSC the turning knob had no function and the car drove without regulation.

### Transmission

The mechanical power from the electrical motor is conveyed to the left back wheel by a two-stage chain transmission. Because of the motors limited power (540 W rated) it is not a problem to direct all the mechanical power to one wheel.

For reducing the number of revolutions from the motor to the rear wheel a two step transmission was used. In order to keep the sprocket wheels firm in the direction of rotation a groove and tongue was used, and tailstock screws were used for fixing in axial direction. At the rear axle a free-wheel available from Renold, DK-2605 Brøndby, Denmark was placed rendering it possible to push the car and to avoid losses if the car was rolling downhill.

It is preferred to use two equal steps of gearing causing minimum losses.

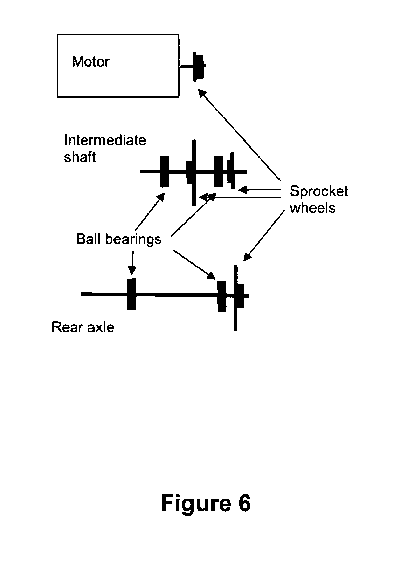

The maximum cruise speed of the car is changes by exchanging the two small sprocket wheels at the motor shaft and at an intermediate shaft as illustrated in Fig. 6. In order to be able to adapt the length of the chains to the amended distance between the sprocket wheels, the motor and the intermediate shafts may be displaced.

The chain had an ultimate strength of 3000 N and had a 6 millimetres pitch according to section DIN 8187 (ISO 606-1982) and was available as # 041 from Jens S. Transmissioner AB, Brogrenen 5, DK 2635 Ishøj, Denmark, and the sprocket wheels were chosen to fit the chain.

When using two sprocket wheels one was adapted to the motor shaft (14 millimetres), and the other to the intermediate shaft (15 millimetres), and they were provided with groove and tongue. Sprocket wheels having 19 and 34 teeth and two sprocket wheels having 76 teeth were used.

Ball bearings available from Sanistål were lubricated using a thin oil WD-40 or Teflon® spray. The free-wheel was lubricated using WD-40 oil as small pieces of Teflon® material might block the device.

### Monitoring and control system

The fuel cell was equipped with a micro controller (MC) which monitored the cell voltages, the current and the time. The MC mainly controlled the speed of the compressor by evaluating an input from a current clamp measuring the current drawn from the FC. The current clamp gave a signal of 8 mV/A, which was transformed to a control signal to the compressor. In addition to the signal from the current clamp there were three adjustable inputs controlling the output to the compressor.
These were:
1. The time interval between purging the cathode side
2. The cell voltage lower limit where purge of air is activated (for instance if this is set to 0.3 V, the compressor will purge if the voltage of any of the cells dropped below this limit)
3. A factor that is multiplied with the input from the current clamp The voltage of each fuel cell was measured and sent to the MC via CAN-BUS data transmission. The cell monitoring was made to avoid damage of the cells and to secure optimal output of the FC.

A display was connected to the MC and placed in the steering wheel of the car. This enabled the driver to see the important basic figures of the fuel cell system. Hence, the driver can make the right decisions or interventions if necessary. All the switches in the electrical system were placed on an instrument panel in front of the driver to enable the driver to make these interventions.

The MC also worked as a digital fuse for the FC and disconnected the motor if a current higher than tolerable was drawn from the stack. A standard fuse was also installed. Lithium ion batteries were running both the MC and the cell voltage monitoring boards.

### Starting procedure

Before starting the membranes of the humidifier were moistened using demineralised water and surplus water was poured off.

First the 24 V battery pack 2 was connected and then the 12 V battery pack 1 in order to avoid a too high pressure impact on the stack of fuel cells. This sequence was chosen as the pressure transmitter is powered by a 24 V source and the control system and the solenoid valve is powered by a 12 V source. This means that it was possible to open the valve by turning off the pressure transmitter giving a signal of 0 bar (0 V) when disconnected causing the system to deliver hydrogen to the system and thus the set value (1 bar) of the secondary pressure valve downstream the solenoid valve will determine the pressure.

The efficiency of the stack of fuel cells increases with increasing temperature and hence it is beneficial to preheat the stack. The optimum temperature is about 70 °C and should not exceed 80 °C. If the temperature is higher, the moistening of the stack is reduced as too much water is carried away with the air being saturated with moisture. This will lead to drying of the stack and reduce the efficiency.

The stack was preheated using a slide rheostat. By letting the stack deliver 30-40 A for about a quarter of an hour, the temperature was increased from 30 °C to 50-70 °C. For shorter use under low load, the stack may be heated to 70 °C as the temperature will then decrease during running the stack.

### Body of Car

The body was aerodynamically shaped with smooth curves. From the top of the body and to the rear end there was a slope of approximately 12 %, which is optimal. Also from the center of the bottom and to the rear the slope was approximately 12 %. The car was narrower in the rear end than in the front. This design was made in order to minimize air resistance.

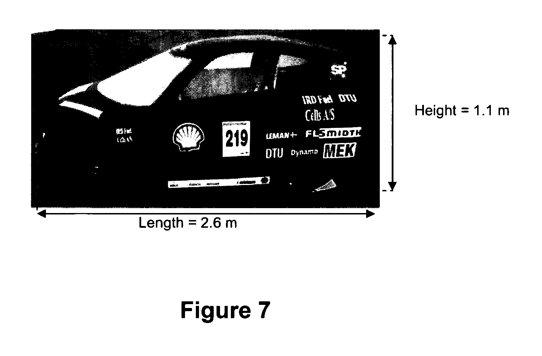

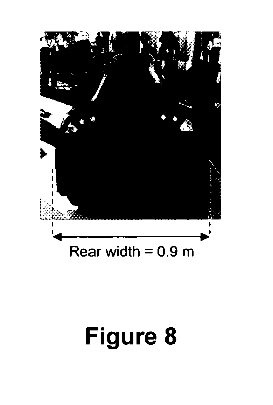

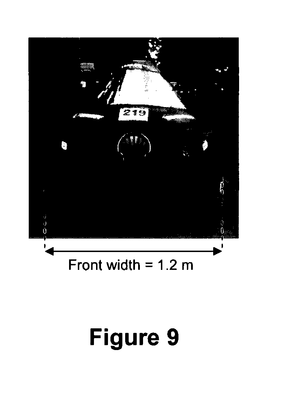

This appears from Figs. 7-9 showing a side view of the car, a rear view of the car and a front view of the car, respectively.

Additionally the side-view mirrors were situated inside the cabin instead of as traditionally on the outside. The rear wheels were also encapsulated by the body. The front wheels were covered by the body from the front but could not be totally encapsulated because of the need for steering. These efforts were done in order to reduce air resistance.

The body of the car was built from layers of carbon/kevlar glued together with epoxy in order to make it as strong and light as possible. Areas with extra need for strength were built as a sandwich construction with hard polyurethane (PU) foam between two layers of carbon/kevlar.

The chassis of the car was built as a sandwich construction with approximately 2 cm of foam in between two layers of carbon/kevlar. There were no additional materials such as aluminium to make the chassis stronger. Places in the chassis where components were to be attached, such as transmission wheel mountings and seat, pieces of wood were placed in order to support the PU-foam and provide a basis to fix the components to.

A safety bar was located approximately in the centre of the car to secure the driver in case of a roll over or other accidents. It was made out from PU foam with an aluminium plate attached to it. The safety bar also acted as a separator between the driver's cabin and the compartment for the power train.

Tests were performed in order to make sure the structure could support the weight of the power train and driver. Also the safety bar was tested. Both proved to be very strong.

The carbon/kevlar fabric provided by SP and the PU foam by L.M. Skumplast A/S, Østre Industrivej 2,DK-6731 Tjæreborg, Denmark.

### Wheels

Special tires having a very low rolling resistance coefficient were chosen. The air resistance of the wheels was very low due to the fact that the wheels were contained in the body. These considerations led to quite wide tires with very low rolling resistance coefficients. In order to avoid the need of custom made rims for this tire rims from the BMW 3 series were used. These rims were quite heavy but the special tires compensated for the higher load and resulted in a lower rolling resistance for the car as compared to other alternatives.

The tires were special tires produced by Michelin and were supplied by Shell Eco-marathon, Shell en France, Shell Eco-marathon, 307 rud d'Estienne d'Orves, 92708 Colombes, France. It was 16" radial tires with the dimensions 95/80/16.
The rims from the BMW 3 series were procured from Jan Nygaard A/S, Englandsvej 51, 2300 København S.

### Modifications

If the urban concept car is to be run continuous for several days it is necessary to have automatic removal of water from the buffer. Water may be removed during operation of the fuel cell stack without loss of hydrogen, as long as a small amount of water is left in the buffer. It is advantageous to ensure that there is a small amount of water in the buffer in order to saturate the hydrogen with moisture and thereby improving the efficiency. This may be ensured by using a float in the buffer that automatically opens and closes a valve depending on the water level in the bottle. Another option is to provide a membrane which only water can pass through at the bottom of the buffer.

In order to reduce the size of the buffer or/and improve hydrogen humidification, the contact area between water and hydrogen could be increased, e.g. by placing a "sponge like material" in the buffer. This will decrease the time it takes for the hydrogen to be saturated. A smaller buffer size will however decrease the purge time and the time between purges on the anode side (if the same pressure interval is used).

Another option is to incorporate an automatic regulation of the volume flow of hydrogen. The regulation of the volume flow would be dependent on the cell voltages in the stack. When the cell voltage fluctuates the volume flow is to be regulated up, and excess water is removed from the anode more efficiently, whereafter the volume flow slowly regulates back to a standard level. A small volume flow will reduce the strain on the fuel cell stack because the pressure increase during purge will be less steep.

In larger power systems it is possible to use one buffer together with many fuel cell stacks. This might reduce the cost of the buffer(s), and only one pressure transmitter will be needed.

### Appendix A

Description of the principle of operation of the motor speed controller (PWM - Pulse Width Modulation).

Extract from the home page http://www.4qdtec.com/pwm-01.html from 28/11-2005:

### The principles

To control the speed of a d.c. motor we need a variable voltage d.c. power source. However if you take a 12v motor and switch on the power to it, the motor will start to speed up: motors do not respond immediately so it will take a small time to reach full speed. If we switch the power off sometime before the motor reaches full speed, then the motor will start to slow down. If we switch the power on and off quickly enough, the motor will run at some speed part way between zero and full speed. This is exactly what a p.w.m. controller does: it switches the motor on in a series of pulses. To control the motor speed it varies (modulates) the width of the pulses - hence Pulse Width Modulation.

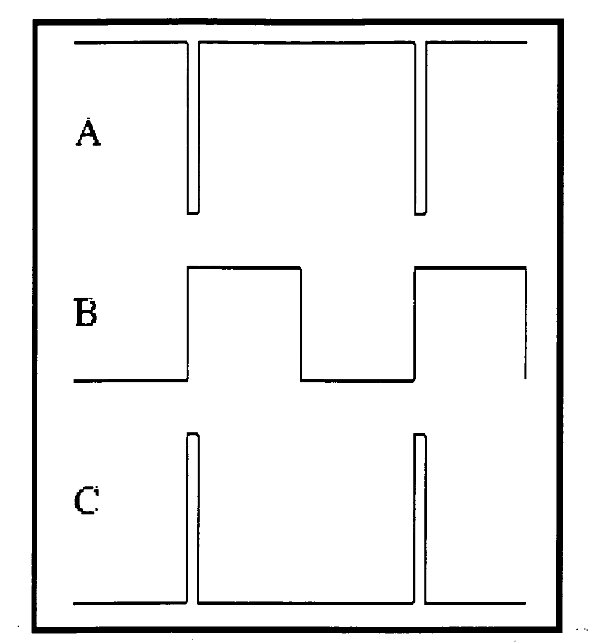

Consider the waveform above. If the motor is connected with one end to the battery positive and the other end to battery negative via a switch (MOSFET, power transistor or similar) then if the MOSFET is on for a short period and off for a long one, as in A above, the motor will only rotate slowly. At B the switch is on 50% and off 50%. At C the motor is on for most of the time and only off a short while, so the speed is near maximum. In a practical low voltage controller the switch opens and closes at 20kHz (20 thousand times per second). This is far too fast for the poor old motor to even realise it is being switched on and off: it thinks it is being fed from a pure d.c. voltage. It is also a frequency above the audible range so any noise emitted by the motor will be inaudible. It is also slow enough that MOSFETs can easily switch at this frequency. However the motor has inductance. Inductance does not like changes in current. If the motor is drawing any current then this current flows through the switch MOSFET when it is on - but where will it flow when the MOSFET switches off? Read on and find out!

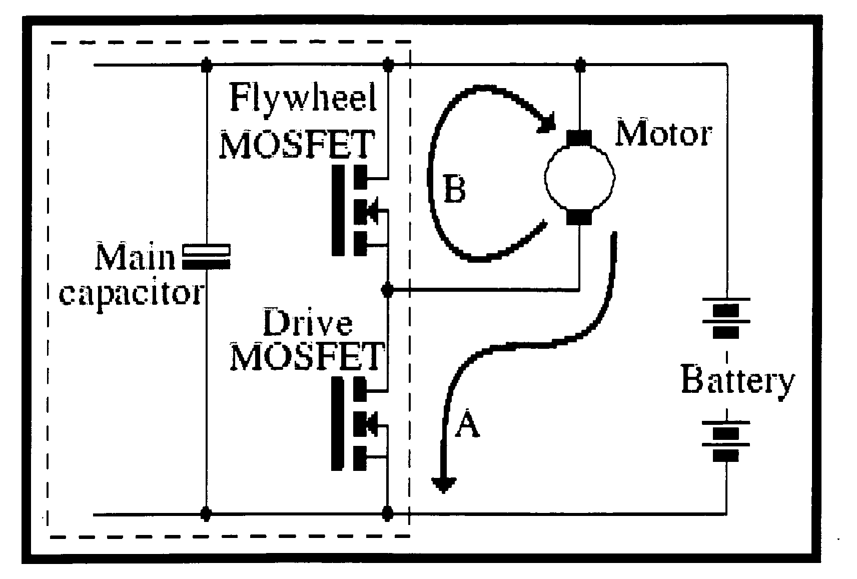

Consider the circuit above: this shows the drive MOSFET and the motor. When the drive MOSFET conducts, current flows from battery positive, through the motor and MOSFET (arrow A) and back to battery negative. When the MOSFET switches off the motor current keeps flowing because of the motor's inductance. There is a second MOSFET connected across the motor: MOSFETs act like diodes for reverse current, and this is reverse current through the MOSFET, so it conducts. You can use a MOSFET like this (short its gate to its source) or you can use a power diode. However a not so commonly understood fact about MOSFETs is that, when they are turned on, they conduct current in either direction. A conducting MOSFET is resistive to current in either direction and a conducting power MOSFET actually drops less voltage than a forward biased diode so the MOSFET needs less heatsinking and wastes less battery power.

You should see from the above that, if the drive MOSFET is on for a 50% duty cycle, motor voltage is 50% of battery voltage and, because battery current only flows when the MOSFET is on, battery current is only flowing for 50% of the time so the average battery current is only 50% of the motor current!

## Claims

1. A system for generating electrical power using fuel cells having inlets for fuel and outlets for reaction products from the anode side of the fuel cells, said system comprising a source of fuel gas which can be oxidized by the fuel cell(s), pipes for conveying the gas from the source to the inlet of at least one fuel cell capable of producing electrical power by oxidizing the gas, wherein the outlet opening(s) from the anode side is(are) connected to one or more closed buffer container(s) downstream the fuel cell(s), and said buffer container(s) comprise(s) a closable outlet.

2. A system as claimed in claim 1 wherein the closable outlet of the closed buffer container(s) is located at lowermost part thereof.

3. A system as claimed in claim 1 or 2 comprising a stack of fuel cells.

4. A system as claimed in any of claims 1-3 wherein the fuel cells are capable of oxidizing hydrogen.

5. A method for generating electrical power using a system comprising fuel cells having inlets for fuel and outlets for reaction products from the anode side of the fuel cells, said system comprising a source of fuel gas which can be oxidized by the fuel cell(s), pipes for conveying the gas from the source to the inlet of at least one fuel cell capable of producing electrical power by oxidizing the gas, wherein the outlet opening(s) from the anode side is(are) connected to one or more closed buffer container(s) downstream the fuel cell(s), and said buffer container comprising a closable outlet, said method comprising operating a cyclic of supply of fuel to the system of the fuel cells and the closed buffer container(s) downstream the fuel cells until a predetermined upper pressure is reached, cutting off the supply of fuel and allowing the fuel cells oxidize at least a part of the fuel present in the fuel cells and the buffer container until a predetermined lower pressure is reached and repeating the cycle for the desired time of operating the fuel cells.

6. A method as claimed in claim 5 wherein fuel is supplied to the system of the fuel cells and the closed buffer container(s) at a flow rate removing excess water from the surfaces of the anodes into the buffer.

7. A method as claimed in claim 5 or 6 wherein water purged from the surfaces of the anodes is drained from the buffer container(s) by opening the closable outlet of the buffer container, letting out water, and closing the outlet before fuel escapes therethrough.

8. A method as claimed in any of claims 6-8 wherein the fuel cells are fuelled by hydrogen

9. A method for running a system for generating electrical power using a system comprising fuel cells having inlets for fuel and outlets for reaction products from the anode side of the fuel cells, said system comprising a source of fuel gas which can be oxidized by the fuel cell(s), pipes for conveying the gas from the source to the inlet of at least one fuel cell capable of producing electrical power by oxidizing the gas, said method comprising intermittently supplying fuel into the system of the fuel cells and through the outlet opening(s) from the anode side being connected to one or more closed buffer container(s) downstream the fuel cell(s), said buffer container comprising a closable outlet, until a predetermined upper pressure is reached, cutting off the supply of fuel and allowing the fuel cells oxidize at least a part of the fuel present in the fuel cells and the buffer container until a predetermined lower pressure is reached and repeating the cycle for the desired time of operating the fuel cells.

10. A method as claimed in claim 9 wherein fuel is supplied to the system of the fuel cells and the closed buffer container(s) at a flow rate removing excess water from the surfaces of the anodes into the buffer.

11. A method as claimed in claim 9 or 10 wherein water is drained from the buffer container(s) by opening the closable outlet of the buffer container, letting out water, and closing the outlet before fuel escapes therethrough.

12. A method as claimed in any of claims 9-11 wherein the fuel cells are fuelled by hydrogen
